# EUROPÄISCHE PATENTSCHRIFT

(11) **EP 0 509 240 B1**
(45) Veröffentlichungstag und Bekanntmachung des Hinweises auf die Patenterteilung: **31.05.1995**
(21) Anmeldenummer: 92104256.0
(22) Anmeldetag: 12.03.1992
(51) Int. Cl.: B60T 8/32, B60T 8/00, B60T 8/60

(54) **Bremsdruckregelanlage**
Brake pressure controlling apparatus
Système régulateur de la pression des freins

(30) Priorität: 19.04.1991 DE 4112759
(43) Veröffentlichungstag der Anmeldung: 21.10.1992
(73) Patentinhaber: ROBERT BOSCH GMBH, 70442 Stuttgart (DE)
(72) Erfinder: Willmann, Karl-Heinz, Dipl.-Ing., W-7149 Freiberg (DE)

(56) Entgegenhaltungen:
- DE-A- 3 741 908
- DE-A- 3 906 530
- DE-A- 4 024 596

## Beschreibung

### Stand der Technik

Eine Bremsdruckregelanlage mit den Mermalen des Oberbegriffes des Anspruchs 1 ist bekannt aus DE-A-4 034 113 (Ausgangspunkt der vorliegenden Erfindung). Bei dieser Anlage wird die Bremsdruckmodulation im ASR-Fall mit Hilfe der ABS-Ventile durchgeführt; während des ASR-Falls ist das Umschaltventil nicht durchlässig und das Ladeventil durchlässig. Will der Fahrer während ASR läuft bremsen, so kann es vorkommen, daß er, da alle Einlaßventile zur Druckmodulation undurchlässig sind ein hartes Bremspedal vorfindet und keine Bremswirkung erzielt. Um dem abzuhelfen, verwendet man das Bremslichtschaltersignal zum Abschalten des ASR.

### Vorteile der Erfindung

Die erfindungsgemäße Bremsdruckregelanlage mit den Merkmalen des Anspruchs 1 hat gegenüber der oben erläuterten Anlage den Vorteil, daß der Fahrer auch bei ASR-Betrieb einbremsen kann. Dies geschieht über das eine Rückschlagventil, über das das Druckmittelvolumen in Richtung Rad verschoben werden kann. Je nachdem, welche Achse für die unterschiedliche Modulation ausgewählt wurde, kann zumindest über das zugehörige Rückschlagventil Druck eingespeist werden. Vorzugsweise wird zusätzlich das Bremslichtschaltersignal zur ASR-Abschaltung ausgenutzt. Ist dieser jedoch ausgefallen, so wird zuerst wenigstens ein Rad und zwar das mit dem höheren Druck und auf niedrigem Reibwert laufende Rad gebremst. Wegen des geringen Reibwerts wird dieses Rad bei Wirksamkeit des Bremsdrucks sofort instabil werden und das Instabilwerden des Rads wird nun auch zum Abschalten des ASR benutzt.
Somit ist im Falle, daß das Bremslichtschaltersignal zusätzlich benutzt wird, ein redundante Möglichkeit für das Wirksamwerden der Bremsen erreicht.

### Figurenbeschreibung

Anhand der Zeichnung werden Ausführungsbeispiele der Erfindung erläutert. Es zeigen:
- Fig. 1: eine Hydraulikschaltbild, bei dem die Bremsen jeweils einer Achse zu einem Bremskreis gehören.
- Fig. 2: ein Hydraulikschaltbild mit diagonaler Zugehörigkeit zu einem Bremskreis.
- Fig. 3: ein Blockschaltbild eines Steuergeräts

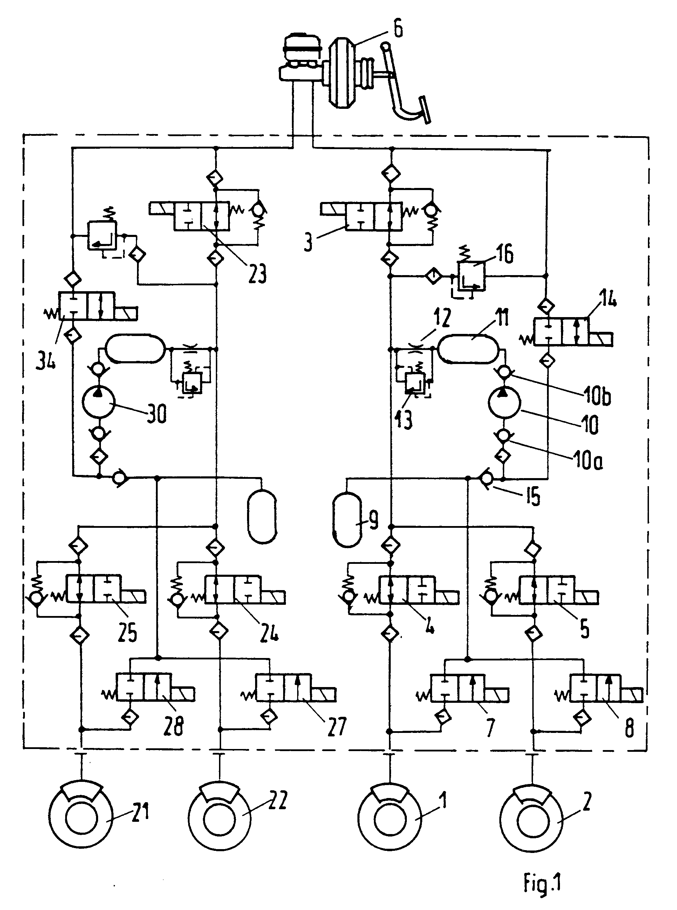

In Fig. 1 sind die Bremsen der Vorderräder 1 und 2 über ein Umschaltventil 3 und ABS-Einlaßventil 4 und 5 mit dem einen Hauptbremszylinder des Bremsaggregats 6 verbunden. Den beiden Einlaßventilen 4 und 5 sind Auslaßventile 7 und 8 zugeordnet, die zeitweise im ABS-Fall Druck zu einer Vorratskammer 9 ablassen. Eine selbstansaugende Rückförderpumpe 10 mit Rückschlagventilen 10a und 10b vor dem Eingang und hinter dem Ausgang, die im ABS-Fall läuft, fördert Druckmittel über eine Druckkammer 11 und eine Drosselstelle 12 in den Bremskreis zurück. Der Drosselstelle ist ein Druckbegrenzungsventil 13 parallel geschaltet.

Für den ASR-Fall sind das Umschaltventil 3 und ein Ladeventil 14 vorgesehen, das in einer Verbindung zwischen dem Hauptbremszylinder (in 6) und dem Pumpeneingang eingeschaltet ist. Ein Rückschlagventil trennt diese Leitung von der Vorratskammer 9 ab. Zwischen den Ventilen 3 und 14 ist eine Verbindung mit einem Druckbegrenzungsventil 16 vorgesehen.

In völlig gleicher Weise ist der den Hinterrädern 21 und 22 zugeordnete Hydraulikkreis aufgebaut, der mit dem zweiten Hauptbremszylinder des Bremsaggregats 6 verbunden ist.

Im ASR-Fall schalten die Ventile 23 und 34 um, die Pumpe 30 läuft an und erzeugt einen Bremsdruck und die ABS-Ventile 24 und 25 und 27 und 28 regeln den Druck an den Radbremsen entsprechend dem Radverhalten.

Zeigt das Rad 1 von den beiden Vorderrädern zuerst Durchdrehneigung, so werden ebenfalls die Ventile 3 und 4 umgeschaltet und die Pumpe 10 läuft an. Der Bremsdruck an der Bremse des Rads 1 wird aber nun nicht durch die Ventile 4 und 7 moduliert, sondern durch Betätigen der Ventile 3 und 14, wobei die Ventile 3 und 14 in der gezeichneten Stellung Druck abbauen, in ihrer anderen Stellung Druck aufbauen und bei der Kombination Ventil 14 in der gezeichneten und das Ventil 3 in der anderen Stellung Druck konstant halten.

Tritt auch noch am Rad 2 Durchdrehneigung auf, so wird der Bremsdruck an diesem Rad durch die Ventil 5 und 8 moduliert, wobei zum Druckaufbau die Ventile 3 und 14 in der nicht gezeigten Stellung sein müssen. Werden für die Druckerhöhung des Bremsdrucks am Rad 2 und die Modulation des Bremsdrucks am Rad 1 unterschiedliche Stellungen der Ventile 3 und 14 gefordert, so werden die Räder nacheinander bedient und zwar nach festgelegtem Prioritätsgesetzen, z.B. das zuerst Durchdrehneigung zeigende Rad vor dem anderen Rad.
Während der ASR-Regelung wird über die Druckauf- und Abbauzeiten geschätzt, welches Vorderrad den höheren Bremsdruck hat. Bei dem Rad mit dem höheren Bremsdruck wird der Druck an der Bremse mit den Ventilen 3 und 14 moduliert, bei dem Rad mit dem geringeren Druck mit den Ventilen 4 und 7 bzw. 5 und 8 Dies kann während der Regelung öfters wechseln.

Es wäre ohne weiteres möglich, die Hinterräder 21 und 22 so wie die Räder 1 und 2 zu modulieren und umgekehrt.

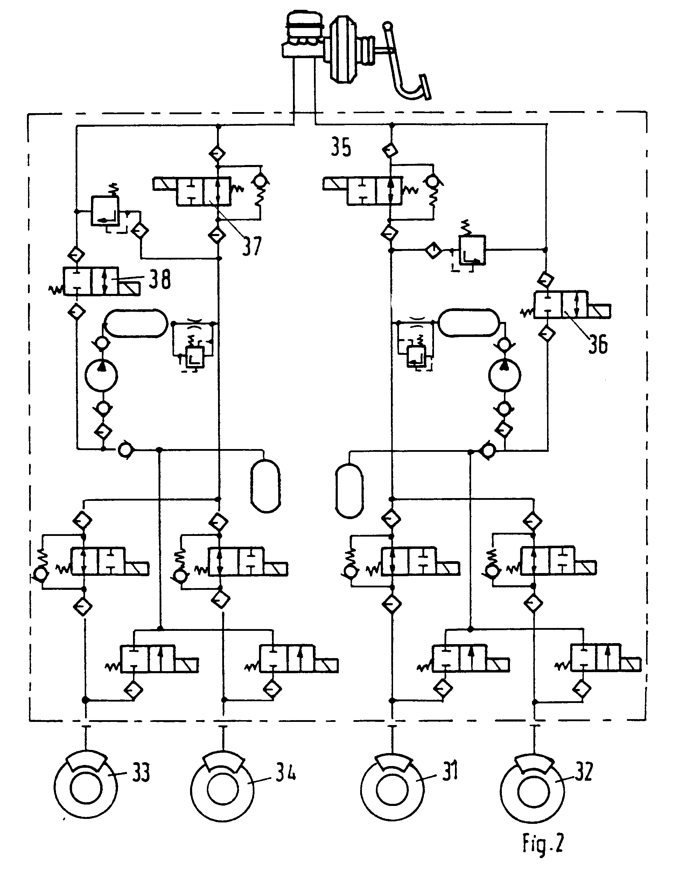

Die Fig. 2 unterscheidet sich von Fig. 1 dadurch, daß die Bremsen diagonal liegender Räder 31 und 32 bzw. 33 und 34 jeweils einem Bremskreis angehören. Auch hier wird der Bremsdruck des höheren Bremsdruck zeigenden Rads einer ausgewählten Achse (z.B. der Hinterachse mit den Rädern 31 und 34) mit einem Umschalt- und einem Ladeventil moduliert und zwar entweder mit den Ventilen 35 und 36 oder 37 und 38.

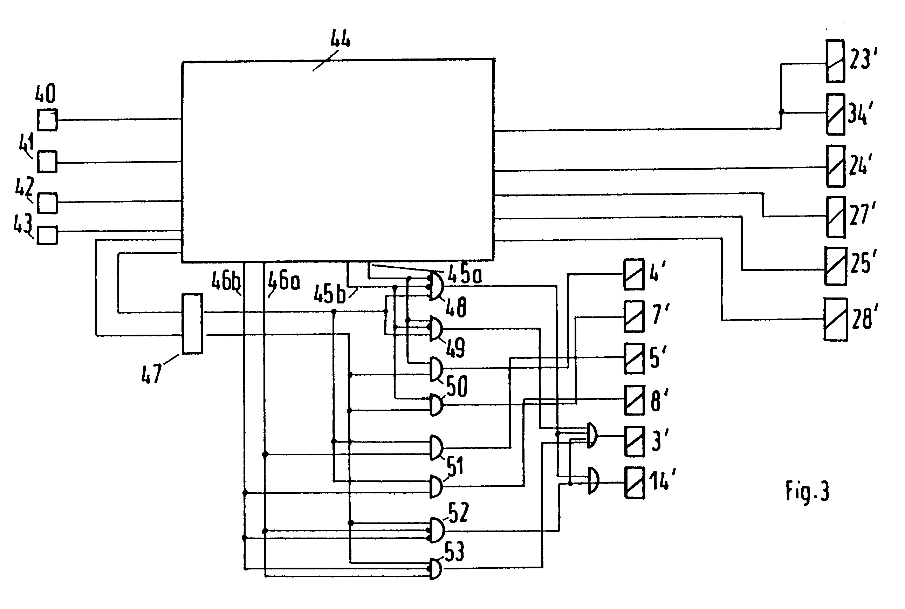

Fig. 3 zeigt eine Ansteuerschaltung für die zwölf Ventile der Fig. 1 oder 2 im ASR-Fall. Die Ansteuerleitungen für den ABS-Fall für die sechs unteren Ventile sind der übersichtlichkeit halber nicht eingezeichnet.

Den vier Rädern sind Radgeschwindigkeitsfühler 40 bis 43 zugeordnet. Die Fühler 42 und 43 sind den Vorderrädern zugeordnet.
Die Signale der Fühler 40 bis 43 werden einem Steuergerät 44 zugeführt, das sowohl ein ABS-als auch ein ASR-Steuergerät sein soll. Hier interessiert nur der ASR-Steuergeräteanteil. Die zwölf anzusteuernden Ventile der Fig. 1 sind in Fig. 3 mit den Ziffern der Fig. 1 jedoch zusätzlich mit einem "'" versehen.

Es wird in Fig. 3 davon ausgegangen, daß die Vorderachse die ausgewählte Achse ist, daß also an den Bremsen ihren Rädern mit unterschiedlichen Mitteln moduliert wird. Im ASR-Fall an der Hinterachse, werden für die ganze ASR-Phase die Ventile 23'und 34' angesteuert, außerdem die Rückförderpumpe eingeschaltet und mit den Einlaßventilen 24' bzw. 25' und Auslaßventilen 27' und 28' der Bremsdruck moduliert.

An der Vorderachse läuft der ASR-Fall jedoch anders ab. Es wird angenommen, daß eine der Leitungen 45a bzw. 46a ein Signal aufweisen, wenn Druck an einer Radbremse konstant gehalten werden soll, daß die Leitungpaare 45a/45b bzw. 46a/46b Signal führen, wenn Druck abgebaut werden soll und die Leitungspaare kein Signal aufweisen, wenn Druck aufgebaut werden soll (wie bei den Leitungen zu den Ein- und Auslaßventilen 24'/27' bzw. 25'/28').

Ein Block 47 stellt fest, welches Rad den höheren Druck hat und gibt ein Ausgangsignal auf seiner oberen Ausgangsleitung ab, wenn über den Meßwertfühler 42 zuerst Durchdrehneigung sensiert wird. Dieses Signal bewirkt, daß einmal Und-Gatter 51 vorbereitet werden, um Modulationssignale auf den Leitungen 46a und 46b zu den Ventilen 5' und 8' gelangen zu lassen daß weiter ein Ausgangssignal an einem Und-Gatter 48 entsteht, wenn keine der Leitungen 45a und 45b Signal führt (Druckaufbau wird gewünscht) und daß schließlich ein Und-Gatter 49 ein Ausgangssignal abgibt, wenn die Leitung 45a Signal führt und Leitung 45 b kein Signal führt (Druckhalten). Das Ausgangssignal des Und-Gatters 48 wird den Ventilen 3' und 14' zugeführt, wodurch es tatsächlich zum Druckaufbau kommt (Die Pmpe 10 ist angelaufen). Ein Ausgangssignal des Und-Gatters 49 steuert nur das Ventil 3' an, sodaß es zur Konstanthaltung kommt. Ist kein Aussteuersiganl für die Ventile 3' und 14' vorhanden, dann wird Druck abgebaut.

Führt die untere Ausgangsleitung des Blocks 47 Signal, dann modulieren die Ventile 4' und 7' die Drücke des Rads, dem der sensor 42 zugeordnet ist und der Druck am anderen Rad wird mittels der Ventile 3' und 14' moduliert. .

In jedem Fall ist immer wenigstens ein Einlaßventil 4' und/oder 5' durchlässig, sodaß das zugehörige Rad mit Bremsdruck beaufschlagt werden kann. Wird dieses instabil, so läuft ABS an, wodurch intern im Block 44 ASR abgeschaltet wird.

## Patentansprüche

1. Bremsdruckregelanlage für ein an allen Rädern angetriebenes Fahrzeug, enthaltend zwei Bremskreise, ein ABS mit individueller Regelung der Räder durch ABS-Ventil (4,5,7,8,24,25,27,28), eine selbstansaugende Rückförderpumpe (10,30) pro Bremskreis, um die bei der Regelung ausgelassene Bremsflüssigkeit in den Bremskreis rückzufördern, und eine Brems-ASR, die die Rückförderpumpen zur Bereitstellung des Bremsdrucks im ASR-Fall ausnutzt, wobei pro Bremskreis ein Umschaltventil (3,23) in die Bremsleitung zwischen Hauptbremszylinder (6) und dem Einspeisepunkt der Rückförderpumpe (10,30) in den Bremskreis eingeschaltet ist, das bei Druckaufbau im ASR-Fall undurchlässig ist und durch ein in Richtung zu den Radbremsen öffnendes Einwegeventil überbrückt ist und wobei in jedem Bremskreis zwischen dem Hauptbremszylinder (6) und dem Eingang der Rückförderpumpe (10,30) eine ein Ladeventil (14,34) aufweisende Verbindung besteht, wobei das Ladeventil (14,34) bei Druckaufbau im ASR-Fall durchlässig ist, und enthaltend eine Steuerschaltung (44) zur Betätigung der Rückförderpumpe (10,30); der Umschalt- und Ladeventile und der ABS-Ventile (4,5,7,8,24,25,27,28) im ASR-Fall, und zur Abschaltung des ASR bei Betätigen der Bremse, dadurch gekennzeichnet, daß die Steuerschaltung derart ausgelegt ist, daß sie mittels des Umschaltventils (3,23) und des Ladeventils (14,34) den Druck an dem höheren Bremsdruck aufweisenden Rad einer ausgewählten Achse moduliert, daß der Druck an den anderen Rädern durch das oder die ABS-Ventile moduliert wird und daß eine Bremsbetätigung durch Ansprechen des den Rädern zugeordneten ABS erkannt wird und dadurch das ASR abgeschaltet wird.

2. Bremsdruckregelanlage nach Anspruch 1, dadurch gekennzeichnet daß jeweils die Räder einer Achse einem Bremskreis zugeordnet sind.

3. Bremsdruckregelanlage und Anspruch 1, dadurch gekennzeichnet daß jeweils die Räder einer Diagonalen einem Bremskreis zugeordnet sind.

4. Bremsdruckregelanlage nach einem der Ansprüche 1 bis 3, dadurch gekennzeichnet, daß zusätzlich das Bremslichtschaltersignal zur Erkennung der Bremsbetätigung dient.

## Claims

1. Brake-pressure regulating system for a vehicle driven on all wheels, containing two brake circuits, an ABS with individual regulation of the wheels by ABS valves (4, 5, 7, 8, 24, 25, 27, 28), a self-priming return pump (10, 30) for each brake circuit, in order to return the brake fluid discharged during regulation into the brake circuit, and braking traction-slip control which utilizes the return pumps for supplying the brake pressure in the traction-slip control situation, for each brake circuit a change-over valve (3, 23) being inserted into the brake conduit between the brake master cylinder (6) and the point of feed of the return pump (10, 30) into the brake circuit, which change-over valve (3, 23) is non-transmitting during pressure build-up in the traction-slip control situation and is bridged by a one-way valve opening in the direction of the wheel brakes, and a connection having a charging valve (14, 34) being present in each brake circuit between the brake master cylinder (6) and the inlet of the return pump (10, 30), the charging valve (14, 34) being transmitting during pressure build-up in the traction-slip control situation, and containing a control circuit (44) for actuating the return pump (10, 30), the change-over and charging valves and the ABS valves (4, 5, 7, 8, 24, 25, 27, 28) in the traction-slip control situation and for cutting out the traction-slip control in the event of the actuation of the brake, characterized in that the control circuit is designed in such a way that, by means of the change-over valve (3, 23) and the charging valve (14, 34), it modulates the pressure on the wheel, having higher brake pressure, of a selected axle, in that the pressure on the other wheels is modulated by the ABS valve or ABS valves, and in that a brake actuation is recognized by the response of the ABS assigned to the wheels and the traction-slip control is thereby cut out.

2. Brake-pressure regulating system according to Claim 1, characterized in that the wheels of each axle are assigned to a brake circuit.

3. Brake-pressure regulating system according to Claim 1, characterized in that the wheels of each diagonal are assigned to a brake circuit.

4. Brake-pressure regulating system according to one of Claims 1 to 3, characterized in that the stop-light switch signal additionally serves for recognizing the brake actuation.

## Revendications

1. Système régulateur de la pression de freinage pour un véhicule dont toutes les roues sont motrices, contenant deux circuits de freinage, un système ABS avec une régulation individuelle des roues par des soupapes de système ABS (4, 5, 7, 8, 24, 25, 27, 28), une pompe de refoulement auto-aspirante (10, 30) par circuit de freinage pour refouler dans le circuit de freinage le liquide de frein qui avait été expulsé lors de la régulation, et un système de freinage ASR, qui exploite les pompes de refoulement pour tenir à disposition la pression de freinage dans le cas du système ASR, une soupape d'inversion (3, 23) étant montée par circuit de freinage dans la canalisation de freinage comprise entre le maître cylindre de freinage (6) et le point d'alimentation de la pompe de refoulement (10, 30) dans le circuit de freinage, soupape qui n'est pas passante lors de la mise en pression dans le cas du système ASR et qui est shuntée par une soupape à une voie qui s'ouvre en direction des freins de roues, une liaison présentant une soupape de charge (14, 34) existant dans chaque circuit de freinage entre le maître cylindre de freinage (6) et l'entrée de la pompe de refoulement (10, 30), la soupape de charge (14, 34) étant passante lors de la mise en pression dans le cas du système ASR et ce système régulateur contenant un circuit de commande (44) pour actionner la pompe de refoulement (10, 30), les soupapes d'inversion et de charge et les soupapes du système ABS dans le cas du système ASR et pour débrancher le système ASR lors de l'actionnement des freins, système régulateur de la pression de freinage caractérisé en ce que le circuit de commande est conçu de telle façon qu'il module la pression au moyen de la soupape d'inversion (3, 23) et de la soupape de charge (14, 34) sur la roue d'un essieu sélectionné, qui présente la pression de freinage la plus élevée, que la pression est modulée sur les autres roues par la ou les soupapes du système ABS et que l'on détecte un actionnement des freins par la mise en marche du système ABS associé aux roues et que l'on débranche de cette façon le système ASR.

2. Système régulateur de la pression de freinage selon la revendication 1, caractérisé en ce que l'on associe respectivement les roues d'un essieu à un circuit de freinage.

3. Système régulateur de la pression de freinage selon la revendication 1, caractérisé en ce que les roues d'une diagonale sont respectivement associées à un circuit de freinage.

4. Système régulateur de la pression de freinage selon l'une des revendications 1 à 3, caractérisé en ce que, en outre, le signal du contacteur de stop sert à détecter l'actionnement des freins.
